(19) **Europäisches Patentamt European Patent Office Office européen des brevets**

(11) **EP 4 664 559 A1**

(12) **EUROPEAN PATENT APPLICATION**
published in accordance with Art. 153(4) EPC

(43) Date of publication:
**17.12.2025 Bulletin 2025/51**

(21) Application number: **24899687.8**

(22) Date of filing: **27.11.2024**

(51) International Patent Classification (IPC):
**H01M 4/525** (2010.01)    **H01M 4/505** (2010.01)
**H01M 4/485** (2010.01)    **H01M 10/0525** (2010.01)

(52) Cooperative Patent Classification (CPC):
**Y02E 60/10**

(86) International application number:
**PCT/CN2024/134719**

(87) International publication number:
**WO 2025/119047 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 CN 202311815035**

(71) Applicant: **BTR (Jiangsu) New Material
Technology Co., Ltd
Changzhou, Jiangsu 213200 (CN)**

(72) Inventors:
• **ZHANG, Wansheng
hangzhou, Jiangsu 213200 (CN)**
• **SONG, Xiong
hangzhou, Jiangsu 213200 (CN)**
• **ZHANG, Jinlong
hangzhou, Jiangsu 213200 (CN)**
• **WU, Xiaozhen
hangzhou, Jiangsu 213200 (CN)**
• **YANG, Shunyi
hangzhou, Jiangsu 213200 (CN)**

(74) Representative: **Novagraaf Technologies
Bâtiment O2
2, rue Sarah Bernhardt
CS90017
92665 Asnières-sur-Seine Cedex (FR)**

(54) **POSITIVE ELECTRODE MATERIAL AND PREPARATION METHOD THEREFOR, AND BATTERY**

(57) A cathode material and a preparation method thereof, and a lithium ion battery are provided. A volume particle size distribution width of the cathode material is Span, $\mathrm{Span} = \dfrac{D_{90} - D_{10}}{D_{50}}$, and a dissociation degree of the cathode material is β, $\beta = \sqrt{\dfrac{D_{50}}{D_{n50}}}$, wherein the cathode material meets the following relationships: $1.1 \leq \beta < 1.65$, and $0.9 \leq \mathrm{Span} \leq 1.53$. The dissociation degree and volume particle size distribution width of the cathode material provided in the present disclosure meet the above conditions, such that it may ensure that the cathode material has a certain electrode plate compaction density to increase an energy density while ensuring the integrity of a crystal structure of the cathode material during charging and discharging of a lithium ion battery, and a gas production value is reduced, thereby causing the cathode material to have excellent cycling performance and safety performance.

EP 4 664 559 A1

Fig. 1

**Description**

This application claims priority to Chinese Patent Application No. 2023118150356 filed to the China National Intellectual Property Administration on December 27, 2023 and entitled "Cathode Material and Preparation Method Thereof, and Lithium Ion Battery", the disclosure of which is hereby incorporated partly by reference.

**Technical Field**

The present disclosure relates to the technical field of electrochemistry, and in particular, to a cathode material and a preparation method thereof, and a battery.

**Background**

Lithium ion batteries have the advantages of being high in energy density, wide in operating temperature range, long in cycle life, etc., and thus are widely applied to the fields such as consumer electronics, electric tools, electric vehicles, industrial energy storage, etc. At present, cathode materials mostly used by the lithium ion batteries are ternary cathode materials.

However, the inventors found that, in the related art, by only increasing a powder compaction density of the cathode material, an electrode plate compaction density of the cathode plate and an energy density of the lithium ion battery cannot be effectively improved, and the efficiency of lithium ion deintercalation is affected, resulting in a reduction in the cycling performance of the lithium ion battery.

**Summary**

The present disclosure provides a cathode material and a preparation method thereof, and a lithium ion battery. By controlling a volume particle size distribution width and dissociation degree of the cathode material, it may ensure that the cathode material has a certain electrode plate compaction density to increase an energy density, and a gas production value of the cathode material during charging and discharging of a lithium ion battery is ensured, such that the cathode material also has excellent cycling performance and safety performance.

In a first aspect, the present disclosure provides a cathode material. A number distribution median particle size of the cathode material is $D_{n50}$ $\mu$m, a volume particle size distribution width of the cathode material is Span,

$\text{Span} = \frac{D_{v90} - D_{v10}}{D_{v50}}$ , a dissociation degree of the cathode material is $\beta$, $\beta = \sqrt{\frac{D_{v50}}{D_{n50}}}$ , a true density of the cathode material is $\rho$ g/cm$^3$, an angle of repose of the cathode material is $\alpha$ rad, and $P_{equivalent}$ is an equivalent density calculation value of the cathode material, with the unit in g/cm$^3$, wherein the cathode material meets at least one of the following relationships.

1), $1.1 \leq \beta < 1.65$, and $0.9 \leq \text{Span} \leq 1.53$.

2),

$$P_{equivalent} = \frac{\text{Span} \times D_{n50} \times \rho}{\beta \times \alpha} \times 0.089 + 2.5, \text{ and } 3.2 \leq P_{equivalent} \leq 3.7.$$

In a second aspect, the present disclosure provides a method for preparing a cathode material. The preparation method includes the following steps.

A segmented sintering treatment is performed on a mixture containing a cathode material precursor and a lithium source to obtain a matrix material, wherein the segmented sintering treatment includes a first phase, a second phase, and a third phase, which are performed in sequence, a sintering temperature $T_1$ for the first phase is 100 °C-300 °C, a sintering temperature $T_2$ for the second phase is 400 °C-800 °C, and a sintering temperature $T_3$ for the third phase is 700 °C-1000 °C.

The matrix material and a coating agent are mixed, then a secondary sintering treatment is performed, and a micron-sized particle dissociation treatment is performed on a secondary sintering product to obtain a cathode material.

In a third aspect, the present disclosure provides a battery. The battery includes the cathode material of the first aspect or a cathode material prepared according to the second aspect.

The technical solutions of the present disclosure have at least the following beneficial effects.

In the present disclosure, by controlling the dissociation degree of the cathode material within a range of 1.1-1.65 (excluding 1.65), and controlling the Span value of the cathode material within a range of 0.9-1.53 at the same time, the particle size distribution width of the cathode material may be guaranteed, facilitating the increasing of the compaction density; and at the same time, the dissociation degree of the cathode material is guaranteed, such that soft agglomeration of particles is reduced, thereby improving the capacity and cycling performance of the cathode material. The cathode material provided in the present disclosure can have a high capacity, excellent cycling performance, and a high energy density.

The equivalent density calculation value, volume particle size distribution width, number distribution median particle size, true density, dissociation degree, volume distribution median particle size, and angle of repose of the cathode material of the present disclosure further meet: $P_{equivalent} = \frac{Span \times D_{n50} \times \rho}{\beta \times \alpha} \times 0.089 + 2.5$ , and 3.2 g/cm$^3 \leq P_{equivalent} \leq 3.7$ g/cm$^3$. The equivalent density calculation value of the cathode material is within the above range, such that a volume energy density of a cathode plate prepared by the cathode material may be increased, thereby increasing a battery capacity of a lithium ion battery. Meanwhile, the relationship among the volume particle size distribution width, number distribution median particle size, true density, dissociation degree, volume distribution median particle size, and angle of repose is balanced through the above relational expression and the equivalent density calculation value of the cathode material, and all performance parameters are within a rational range, such that it may ensure that the cathode material has a certain electrode plate compaction density to increase an energy density while ensuring the integrity of a crystal structure of the cathode material during charging and discharging of a lithium ion battery, and a gas production value is reduced, thereby causing the cathode material to have excellent cycling performance and safety performance.

According to the method for preparing a cathode material provided in the present disclosure, the cathode material of which volume particle size distribution width, number distribution median particle size, true density, dissociation degree, volume distribution median particle size, angle of repose, and electrode plate compaction density meet a balanced relationship is obtained through the segmented sintering treatment and the micron-sized particle dissociation treatment, such that it ensures that the cathode material has a certain electrode plate compaction density to increase an energy density while ensuring the integrity of a crystal structure of the cathode material during charging and discharging of a lithium ion battery, and a gas production value is reduced, thereby promoting the cathode material to have excellent cycling performance and safety performance.

**Brief Description of the Drawings**

Fig. 1 is a schematic diagram of a discharging state of a battery according to embodiments of the present disclosure.

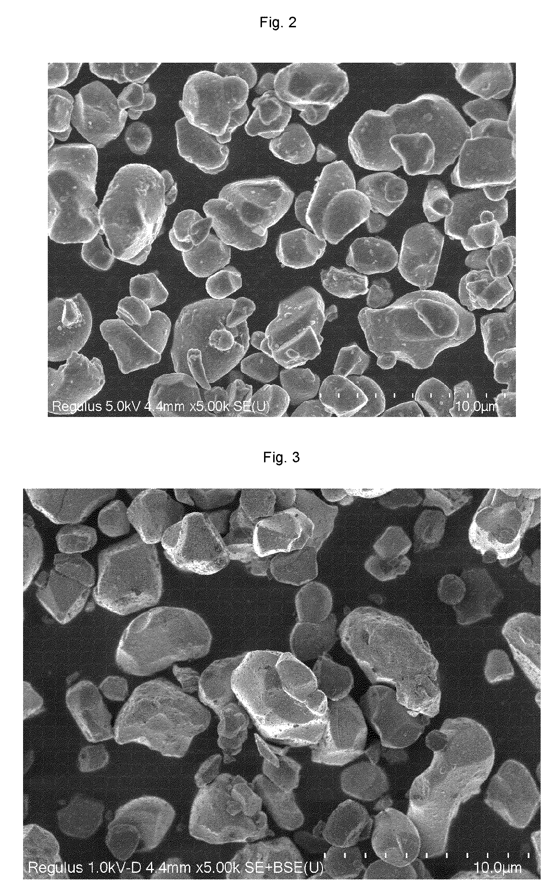

Fig. 2 is a Scanning Electron Microscope (SEM) diagram of a cathode material according to the present disclosure.

Fig. 3 is an SEM diagram of a cathode material according to the related art.

**Detailed Description of the Embodiments**

This solution is explained below through embodiments. The embodiments are exemplary and are merely used to explain the present disclosure, but explain not be construed as a limitation on the present disclosure.

Since by only increasing a powder compaction density of the cathode material, an electrode plate compaction density of the cathode plate and an energy density of the lithium ion battery cannot be effectively improved, and the efficiency of lithium ion deintercalation is affected, resulting in a reduction in the cycling performance of the lithium ion battery. The inventors increase the compaction density of the cathode material and the energy density of the lithium ion battery by improving a product process and controlling heat-treatment temperatures in different phases. Through research, the inventors found that changes in the performance of the cathode material may not only be embodied from value ranges of a particle size distribution width span value and dissociation degree β value of the cathode material, but also be embodied from a relationship between the particle size distribution width span value and the dissociation degree β value of the cathode material, a true density ρ g/cm$^3$ of the cathode material, and an angle of repose α rad of the cathode material. In an aspect, by controlling the dissociation degree of the cathode material within a range of 1.1-1.65 (excluding 1.65), and controlling the Span value of the cathode material within a range of 0.9-1.53 at the same time, the particle size distribution width of the cathode material may be guaranteed, facilitating the increasing of the compaction density; and at the same time, the dissociation degree of the cathode material is guaranteed, such that soft agglomeration of particles is reduced, thereby improving the capacity and cycling performance of the cathode material. In another aspect, the equivalent density calculation value, volume particle size distribution width, number distribution median particle size, true density, dissociation degree, volume distribution median particle size, and angle of repose of the cathode material of the present disclosure further meet: $P_{equivalent} = \dfrac{Span \times D_{n50} \times \rho}{\beta \times \alpha} \times 0.089 + 2.5$ , and $3.2\ g/cm^3 \leq P_{equivalent} \leq 3.7$ $g/cm^3$. The equivalent density calculation value of the cathode material is within the above range, such that a volume energy density of a cathode plate prepared by the cathode material may be increased, thereby increasing a battery capacity of a lithium ion battery. Meanwhile, the relationship among the volume particle size distribution width, number distribution median particle size, true density, dissociation degree, volume distribution median particle size, and angle of repose is balanced through the above relational expression and the equivalent density calculation value of the cathode material, and all performance parameters are within a rational range, such that it may ensure that the cathode material has a certain electrode plate compaction density to increase an energy density while ensuring the integrity of a crystal structure of the cathode material during charging and discharging of a lithium ion battery, and a gas production value is reduced, thereby promoting the cathode material to have excellent cycling performance and safety performance.

In a first aspect, the present disclosure provides a cathode material. A volume particle size distribution width of the cathode material is Span, $Span = \dfrac{D_{v90} - D_{v10}}{D_{v50}}$ , and a dissociation degree of the cathode material is β, $\beta = \sqrt{\dfrac{D_{v50}}{D_{n50}}}$ , wherein the cathode material meets the following relationships: $1.1 \leq \beta < 1.65$, and $0.9 \leq Span \leq 1.53$.

It is generally considered that the volume particle size distribution width Span of the cathode material is not necessarily related to the dissociation degree β. Generally, the Span of the cathode material is high, the particle size distribution width of the cathode material is large, particle sizes vary greatly and the sizes are different, the dissociation degree of the cathode material is relatively high, and in this case, small particles in the cathode material fill in gaps between large particles, such that the compaction density of a cathode plate is also high. However, during actual preparation, a soft agglomeration phenomenon occurs in the particles of the cathode material, and such particles formed through soft agglomeration lead to a relatively low Span value of the cathode material and a relatively narrow particle size distribution width, such that the particle sizes between the particles are closer, and for such particles formed through soft agglomeration, a connection strength between the primary particles is lower compared to secondary particles formed through hard agglomeration of the primary particles. During preparation and rolling of an electrode plate, the softly-agglomerated particles disperse, causing surfaces of uncoated primary particles to be exposed to electrolyte, and thus affecting the cycling performance of the cathode material. It is to be noted that, during the preparation of the cathode material, a coating agent can generally only coat the surfaces of the softly-agglomerated particles, and attached surfaces of the plurality of primary particles in the softly-agglomerated particles are difficultly coated by the coating agent, such that after the softly-agglomerated particles disperse, the attached surfaces of the plurality of primary particles are exposed to the electrolyte.

Therefore, in the present disclosure, by controlling the dissociation degree of the cathode material within a range of 1.1-1.65 (excluding 1.65), and controlling the Span value of the cathode material within a range of 0.9-1.53 at the same time, in an aspect, the particle size distribution width of the cathode material may be guaranteed, facilitating the increasing of the compaction density, and at the same time, the dissociation degree of the cathode material is guaranteed, such that soft agglomeration of particles is reduced, thereby improving the capacity and cycling performance of the cathode material. The cathode material provided in the present disclosure can have a high capacity, excellent cycling performance, and a high energy density.

In some implementations, the volume particle size distribution width Span value of the cathode material is 0.9-1.53. Optionally, the volume particle size distribution width Span of the cathode material may specifically be 0.9, 1.0, 1.1, 1.2, 1.3, 1.4, 1.5, 1.53, or the like, or may also be other values within the range, may be selected according to actual requirements, and is not limited herein. It may be understood that, the volume particle size distribution width Span of the cathode material is within the range, such that the particle size distribution of the cathode material is appropriate, the difference in the particle sizes between the large particles and the small particles is not too large. During the preparation of the cathode plate, the small particles may effectively fill the gap between the large particles, so as not to increase reactions with the electrolyte due to an increased specific surface area of the cathode material caused by too small volumes of the small particles while increasing the compaction density of the cathode plate, and a gas production value of the cathode material during charging and discharging is effectively reduced, thereby ensuring the stability of a crystal structure of the cathode material during charging and discharging, and improving the cycling performance and safety performance of the cathode material. Preferably, the volume particle size distribution width Span value of the cathode material is 1.0-1.3.

In some implementations, a dissociation degree β of the cathode material is 1.1-1.65 (excluding 1.65). Optionally, the dissociation degree β of the cathode material may specifically be 1.1, 1.2, 1.3, 1.4, 1.5, 1.6, 1.62, 1.63, or the like, or may also be other values within the range, may be selected according to actual requirements, and is not limited herein. It may be understood that, the dissociation degree β of the cathode material is within the range, such that the softly-agglomerated particles among the cathode material particles are less. During rolling, the likelihood of particle crushing is reduced, such that the problems of increased reactions of the electrolyte caused by particle crushing may be reduced, thereby effectively reduce the gas production value of the cathode material during charging and discharging. That is, an appropriate dissociation degree may improve the safety performance and cycling performance of the cathode material while ensuring the electrode plate compaction density of the cathode material. Preferably, the dissociation degree $\beta$ of the cathode material is 1.2-1.6.

In some implementations, the number distribution median particle size of the cathode material is $D_{n50}$ $\mu$m, the true density of the cathode material is $\rho$ g/cm$^3$, the angle of repose of the cathode material is $\alpha$ rad, and the $P_{equivalent}$ is an equivalent density calculation value of the cathode material, with the unit in g/cm$^3$, wherein a relationship between the $P_{equivalent}$ and the volume particle size distribution width Span of the cathode material, the number distribution median particle size $D_{n50}$ of the cathode material, the true density $\rho$, the dissociation degree $\beta$, and the angle of repose $\alpha$ of the cathode material meets a Formula (I).

$$P_{equivalent} = \frac{Span \times D_{n50} \times \rho}{\beta \times \alpha} \times 0.089 + 2.5 \ \text{Formula (I)}$$

$$3.2 \leq P_{equivalent} \leq 3.7.$$

In the above solution, the equivalent density calculation value, volume particle size distribution width, number distribution median particle size, true density, dissociation degree, volume distribution median particle size, and angle of repose of the cathode material of the present disclosure meet: 3.2 g/cm$^3$ $\leq P_{equivalent} \leq$ 3.7 g/cm$^3$. The equivalent density calculation value of the cathode material is within the above range, such that a volume energy density of a cathode plate prepared by the cathode material may be increased, thereby increasing a battery capacity of a lithium ion battery. Meanwhile, the relationship among the volume particle size distribution width, number distribution median particle size, true density, dissociation degree, volume distribution median particle size, and angle of repose is balanced through the above relational expression and the equivalent density calculation value of the cathode material, and all performance parameters are within a rational range, such that it may ensure that the cathode material has a certain electrode plate compaction density to increase an energy density while ensuring the integrity of a crystal structure of the cathode material during charging and discharging of a lithium ion battery, and a gas production value is reduced, thereby promoting the cathode material to have excellent cycling performance and safety performance.

In some implementations, the $P_{equivalent}$ may specifically be 3.2 g/cm$^3$, 3.3 g/cm$^3$, 3.4 g/cm$^3$, 3.5 g/cm$^3$, 3.6 g/cm$^3$, 3.65 g/cm$^3$, 3.7 g/cm$^3$, or the like, or may definitely be other values within the above range, and is not limited herein. Preferably, $P_{equivalent}$ meets 3.5 $\leq P_{equivalent} \leq$ 3.7.

In some implementations, the volume distribution median particle size $D_{v50}$ of the cathode material is 3 $\mu$m-15 $\mu$m. Optionally, the volume distribution median particle size Dv50 of the cathode material may specifically be 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, or the like, or may also be other values within the range, may be selected according to actual requirements, and is not limited herein. It may be understood that, the volume distribution median particle size $D_{v50}$ of the cathode material is within the range, such that the particles with large volumes and the particles with small volumes are appropriate in number. During the preparation of the cathode plate, the small particles may effectively fill the gap between the large particles, so as to increase the compaction density of the cathode plate, and the reactions with the electrolyte due to the increased specific surface area caused by excessive small particles are not increased, thereby effectively reducing the gas production value of the cathode material during charging and discharging, ensuring the stability of a crystal structure of the cathode material during charging and discharging, and improving the cycling performance and safety performance of the cathode material. Preferably, the volume distribution median particle size $D_{v50}$ of the cathode material is 3 $\mu$m-11 $\mu$m.

In some implementations, the number distribution median particle size $D_{n50}$ of the cathode material is 1.0 $\mu$m-2.5 $\mu$m. Optionally, the number distribution median particle size $D_{v50}$ of the cathode material may specifically be 1.0 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m, 1.8 $\mu$m, 1.9 $\mu$m, 2.0 $\mu$m, 2.1 $\mu$m, 2.2 $\mu$m, 2.3 $\mu$m, 2.4 $\mu$m, 2.5 $\mu$m, or the like, or may also be other values within the range, may be selected according to actual requirements, and is not limited herein. It may be understood that, the number distribution median particle size $D_{n50}$ of the cathode material is within the range, such that the large particles and the small particles are appropriate in number. During the preparation of the cathode plate, the small particles may effectively fill the gap between the large particles, so as to increase the compaction density of the cathode plate, and the reactions with the electrolyte due to the increased specific surface area caused by excessive small particles are not increased, thereby effectively reducing the gas production value of the cathode material during charging and discharging, ensuring the stability of a crystal structure of the cathode material during charging and discharging, and improving the cycling performance and safety performance of the cathode material. Preferably, the number distribution median particle size $D_{n50}$ of the cathode material is 1.1 $\mu$m-2.4 $\mu$m.

In some implementations, the true density $\rho$ of the cathode material is 4.5 g/cm$^3$-4.8 g/cm$^3$. Optionally, the true density $\rho$ of the cathode material may specifically be 4.5 g/cm$^3$, 4.6 g/cm$^3$, 4.7 g/cm$^3$, 4.8 g/cm$^3$, or the like, or may also be other values within the range, may be selected according to actual requirements, and is not limited herein. It may be understood that, the true density $\rho$ of the cathode material is within the range, such that a contact between the cathode material particles is closer, the transmission of lithium ions during charging and discharging is smoother, leading to a reduction in the impedance of the cathode material. Therefore, the effective of intercalation and deintercalation of the lithium ions may be improved, a polarization phenomenon in the cathode material is reduced, and the normal functioning of battery capacity is ensured, thereby improving the charging and discharging efficiency of a battery. Preferably, the true density $\rho$ of the cathode material is 4.6 g/cm$^3$-4.7 g/cm$^3$.

In some implementations, the angle of repose $\alpha$ of the cathode material is 0.70 rad-1.22 rad. Optionally, the angle of repose $\alpha$ of the cathode material may specifically be 0.7 rad, 0.8 rad, 0.9 rad, 1.0 rad, 1.1 rad, 1.2 rad, 1.22 rad, or the like, or may also be other values within the range, may be selected according to actual requirements, and is not limited herein. It may be understood that, the angle of repose is related to the flowability of the cathode material particles. The angle of repose of the cathode material of the present disclosure is within the range, the flowability of the cathode material particles may be improved to further reduce the gaps between adjacent cathode material particles, thereby increasing the compaction density of the cathode plate prepared by the cathode material. Preferably, the angle of repose $\alpha$ of the cathode material is 0.87 rad-1.05 rad.

In some implementations, a general chemical formula of the cathode material is $Li_aNi_xCo_yM_zD_bO_2$, $0.9 \leq a \leq 1.05$, $0.5 \leq x \leq 1$, $0 \leq y \leq 0.5$, $0 \leq b \leq 0.3$, and $x+y+z+b=1$, wherein M is selected from at least one of Mn or Al, D is a doped element, and the type of the cathode material may be selected according to actual requirements and is not limited herein. Preferably, $0.95 \leq a \leq 1.01$, $0.6 \leq x \leq 0.98$, $0 \leq y \leq 0.2$, and $0 \leq b \leq 0.2$.

Specifically, a value of a may be 0.95, 0.98, 0.99, 1.0, 1.01, 1.03, 1.035, 1.04, 1.05, or the like; a value of x may be 0.5, 0.6, 0.7, 0.8, 0.85, 0.9, 0.92, 0.93, 0.95, 0.98, 1, or the like; a value of y may be 0, 0.05, 0.08, 0.1, 0.15, 0.2, 0.25, 0.3, 0.5, or the like; and a value of b may be 0, 0.01, 0.05, 0.1, 0.2, 0.25, 0.28, 0.3, or the like, or may definitely be other values within the above range, and is not limited herein. It is to be noted that, contents of all elements in the cathode material may be determined by known instruments such as ICP and ICP-MS for performing qualitative analysis and/or quantitative analysis on the elements.

In some implementations, the doped element D includes at least one of Ni, Co, Mn, Ta, Mo, W, Mg, La, Al, Y, Ti, Zr, V, Nb, Ce, Sr, or B, and the type of the doped element D may be selected according to actual requirements and is not limited herein. These doped elements may change a lattice constant of the cathode material or valence states of bulk elements of the material, so as to reduce cation mixing, such that the electronic conductivity and ionic conductivity of the material are improved, the stability of a material structure is improved, and the collapse of the crystal structure of the cathode material is inhibited, thereby improving the cycling performance of the cathode material.

In some implementations, a specific surface area of the cathode material is 0.5 m$^2$/g-1.0 m$^2$/g. Optionally, the specific surface area of the cathode material may specifically be 0.5 m$^2$/g, 0.6 m$^2$/g, 0.7 m$^2$/g, 0.8 m$^2$/g, 0.9 m$^2$/g, 1.0 m$^2$/g, or the like, or may also be other values within the range, may be selected according to actual requirements, and is not limited herein. It may be understood that, the specific surface area of the cathode material is within the range, more intercalation sites may be provided for the lithium ions, so as to increase the capacity of a lithium ion battery. Preferably, the specific surface area of the cathode material is 0.7 m$^2$/g-0.9 m$^2$/g.

In some implementations, the cathode material includes a plurality of primary particles, and an average particle size of the primary particles is 2.0 $\mu$m-2.2 $\mu$m. Optionally, the average particle size of the primary particles may specifically be 2.0 $\mu$m, 2.03 $\mu$m, 2.06 $\mu$m, 2.09 $\mu$m, 2.12 $\mu$m, 2.15 $\mu$m, 2.18 $\mu$m, 2.2 $\mu$m, or the like, or may also be other values within the range, may be selected according to actual requirements, and is not limited herein. It is understandable that, the average particle size of the primary particles is within the range, such that a contact area between the adjacent primary particles of the cathode material is increased while the compaction density of the cathode plate prepared by the cathode material is high, and a conduction rate of the lithium ions may be accelerated, thereby improving the ionic conductivity of the cathode material.

In some implementations, a particle size range of the primary particles is < 2 $\mu$m. Optionally, the particle size range of the primary particles may specifically be 1.99 $\mu$m, 1.8 $\mu$m, 1.6 $\mu$m, 1.4 $\mu$m, 1.2 $\mu$m, 1 $\mu$m, or the like, or may also be other values within the range, may be selected according to actual requirements, and is not limited herein. It may be understood that, the particle size range of the primary particles is within the range, such that the difference in the particle size between the primary particles with a large size and the primary particles with a small size is not too large, and inconsistent charging/discharging rates due to the large difference in the particle sizes of the primary particles are reduced. Since the primary particles with a small size have high reaction activity, exacerbated side reactions with the electrolyte exacerbate, such that by controlling the particle size range of the primary particles within the range, the capacity of the cathode material is increased, reactions between the cathode material and the electrolyte during charging and discharging are reduced, and the gas production value is reduced, thereby ensuring the cycling performance and safety performance of the cathode material.

In some implementations, in a particle size distribution pattern of the cathode material, a volume particle size distribution curve of the cathode material is normally distributed. It may be understood that, the particle size of the cathode material is normally distributed, and micro-powder defects (i.e., small particles are present on surfaces of the particles, leading to exacerbated reactions between the cathode material and the electrolyte) caused by too large difference in the particle sizes of the cathode material particles are reduced, such that the reactions between the cathode material and the electrolyte during charging and discharging are reduced, and the gas production value is reduced, thereby ensuring the cycling performance and safety performance of the cathode material.

In some implementations, an actual electrode plate compaction density of the cathode material under a pressure of 3T is $P_{actual}$, wherein $0.75P_{equivalent} \leq P_{actual} \leq 1.3P_{equivalent}$. It may be understood that, according to a ratio range of the actual electrode plate compaction density and the equivalent density calculation value, the electrode plate compaction density of the cathode material meeting a preparation requirement may be selected, such that adverse effects brought by compaction density deviations caused by process errors during the preparation of the cathode material may be reduced, thereby further ensuring that the electrode plate compaction density of the cathode material meets production requirements.

In some implementations, the primary particles consistessentially of monocrystalline structures, that is, the cathode material is a monocrystalline cathode material. It may be understood that, the primary particles having the monocrystalline structures have the advantages of being high in mechanical strength, small in specific surface area, etc. The high mechanical strength can ensure that the primary particles may bear a larger mechanical pressure compared to polycrystalline cathode material particles, the probability of particle crushing of the cathode material is reduced, such that the compaction density of the cathode material may be increased. A small specific surface area can effectively reduce the contact between the cathode material and the electrolyte, so as to reduce the probability of the side reactions, such that the consumption of the lithium ion due to the side reactions is reduced, thereby improving the electrochemical performance of the cathode material. Meanwhile, the primary particles having the monocrystalline structures have a high orientation degree, such that intergranular cracks due to anisotropic stresses may be effectively reduced to further relieve the side reactions between the cathode material and the electrolyte, and interface stability is improved, such that irreversible phase changes in the cathode material from a layered structure to a rock salt phase structure, thereby improving the structure stability and cycling performance of the cathode material.

It is to be noted that, a difference between the monocrystalline cathode material and the polycrystalline cathode material (i.e., polycrystalline secondary particles) lies in that, the polycrystalline secondary particles are secondary particles that are formed by agglomerating the primary particles with the smallest particles are at a nanometer level. For the monocrystalline cathode material, the smallest particle is generally a micron-sized single primary particle. Generally, in addition to the EBSD testing means, whether a cathode product is a monocrystalline material may also be determined through characterization methods such as a Scanning Electron Microscope (SEM), etc. For example, for the monocrystalline cathode material, shapes of monocrystalline particles may be characterized by the SEM, and it is aware that the monocrystalline particles are generally embodied as regular or irregular polyhedrons or spheres without significant particle agglomeration. An orientation of the monocrystalline cathode material may also be characterized by the EBSD. Through the EBSD, it may be observed that a color in at least one crystal particle is the same, so as to determine that an orientation in at least one crystal particle is the same, and the crystal particles having the same orientations are single crystals. It is to be specifically noted that, the "monocrystalline cathode material" known to those skilled in the art is not the "single crystal" in the strict crystallographic sense. Crystallographically, ideal monocrystalline refers to a crystal that has exactly the same arrangement and orientation. However, limited by impurities, strain, and crystal defects, the ideal monocrystalline is very rare, and very difficult to produce in a laboratory. Therefore, monocrystalline cathode materials known in the art are actually more "monocrystalline-like" cathode materials, which only show large monocrystalline-like particle sizes, as opposed to polycrystals that are formed by a large number of small primary particles.

In a second aspect, the present disclosure provides a method for preparing a cathode material. The preparation method includes the following steps.

At S10, a segmented sintering treatment is performed on a mixture containing a cathode material precursor and a lithium source to obtain a matrix material, where the segmented sintering treatment includes a first phase, a second phase, and a third phase, which are performed in sequence, a sintering temperature $T_1$ for the first phase is 100 °C-300 °C, a sintering temperature $T_2$ for the second phase is 400 °C-800 °C, and a sintering temperature $T_3$ for the third phase is 700 °C-1000°C.

At S20, the matrix material and a coating agent are mixed, then a secondary sintering treatment is performed, and a micron-sized particle dissociation treatment is performed on a secondary sintering product to obtain a cathode material.

In the above solution, according to the method for preparing a cathode material provided in the present disclosure, the cathode material of which volume particle size distribution width, number distribution median particle size, true density, dissociation degree, volume distribution median particle size, angle of repose, and electrode plate compaction density meet a balanced relationship is obtained through the segmented sintering treatment and the micron-sized particle dissociation treatment (i.e., a process of obtaining micron-sized particles by dissociate a secondary sintering product), such that it ensures that the cathode material has a certain electrode plate compaction density to increase an energy density while ensuring the integrity of the crystal structure of the cathode material during charging and discharging of the lithium ion battery, and the gas production value is reduced, thereby promoting the cathode material to have excellent cycling performance and safety performance.

The preparation method of the present disclosure is introduced below in detail with reference to embodiments.

At S10, the segmented sintering treatment is performed on the mixture containing the cathode material precursor and the lithium source to obtain the matrix material, where the segmented sintering treatment includes the first phase, the second phase, and the third phase, which are performed in sequence, the sintering temperature $T_1$ for the first phase is 100 °C-300 °C, the sintering temperature $T_2$ for the second phase is 400 °C-800 °C, and the sintering temperature $T_3$ for the third phase is 700 °C-1000 °C.

In some implementations, the cathode material precursor includes at least one of an oxide of $Ni_xCo_yM_{1-x-y}$ or a hydroxide of the $Ni_xCo_yM_{1-x-y}$, wherein $0.33 \leq x < 1$, $0 \leq y \leq 0.33$, M is selected from at least one of Mn or Al, and the type of the cathode material precursor may be selected according to actual requirements and is not limited herein.

In some implementations, the lithium source includes at least one of lithium hydroxide, lithium carbonate, lithium nitrate, lithium acetate, lithium sulfate, or lithium oxalate, and the type of the lithium source may be selected according to actual requirements and is not limited herein.

In some implementations, a molar ratio of the cathode material precursor to the lithium source is 1:(1-1.06). Optionally, the molar ratio of the cathode material precursor to the lithium source may specifically be 1:1, 1:1.01, 1:1.02, 1:1.03, 1:1.04, 1:1.05, 1:1.06, etc., or may be other values within the range, may be selected according to actual requirements, and is not limited herein.

In some implementations, the mixture further includes an additive, and elements in the additive contain at least one of Ni, Co, Mn, Ta, Mo, W, Mg, La, Al, Y, Ti, Zr, V, Nb, Ce, Sr, or B; and the elements contained in the additive may be selected according to actual requirements, and are not limited herein.

In some implementations, the mixture further includes the additive, and a mass ratio of the cathode material precursor to the additive is 100:(0.05-0.40). Optionally, the mass ratio of the cathode material precursor to the additive may specifically be 100:0.05, 100:0.10, 100:0.15, 100:0.20, 100:0.25, 100:0.30, 100:0.35, 100:0.40, etc., or may be other values within the range, may be selected according to actual requirements, and is not limited herein.

In some implementations, the segmented sintering treatment is performed in an oxygen-containing atmosphere.

In some implementations, a heating rate of the first phase is $V_1$, a heating rate of the second phase is $V_2$, a heating rate of the third phase is $V_3$, and $0 < V_3 < V_2 < V_1 < 5$ °C/min.

In some implementations, a temperature-holding time $t_1$ for the first phase is 1 h-2 h. Optionally, the temperature-holding time for the first phase may specifically be 1 h, 1.2 h, 1.4 h, 1.6 h, 1.8 h, 2 h, etc., or may be other values within the range, may be selected according to actual requirements, and is not limited herein.

In some implementations, a temperature-holding time $t_2$ for the second phase is 4 h-6 h. Optionally, the temperature-holding time for the second phase may specifically be 4 h, 4.2 h, 4.4 h, 4.6 h, 4.8 h, 5 h, 5.2 h, 5.4 h, 5.6 h, 5.8 h, 6 h, etc., or may be other values within the range, may be selected according to actual requirements, and is not limited herein.

In some implementations, a temperature-holding time $t_3$ for the third phase is 5 h-10 h. Optionally, the temperature-holding time for the third phase may specifically be 5 h, 6 h, 7 h, 8 h, 9 h, 10 h, etc., or may be other values within the range, may be selected according to actual requirements, and is not limited herein.

In some implementations, after the segmented sintering treatment, the method further includes: a crushing treatment is performed on the matrix material, and a volume distribution median particle size $D_{v50}$ of a product of the crushing treatment is 3.3 $\mu$m-4.0 $\mu$m. Optionally, the volume distribution median particle size $D_{v50}$ of the product of the crushing treatment may specifically be 3.3 $\mu$m, 3.4 $\mu$m, 3.5 $\mu$m, 3.6 $\mu$m, 3.7 $\mu$m, 3.8 $\mu$m, 3.9 $\mu$m, 4.0 $\mu$m, etc., or may be other values within the range, may be selected according to actual requirements, and is not limited herein. It may be understood that, the volume distribution median particle size $D_{v50}$ of the product of the crushing treatment is within the range, such that particles of the matrix material are uniform, facilitating subsequent coating treatment and micron-sized particle dissociation treatment.

In some implementations, a number distribution median particle size $D_{n50}$ of the product of the crushing treatment is 0.6 $\mu$m-2.5 $\mu$m. Optionally, the number distribution median particle size $D_{n50}$ of the product of the crushing treatment may specifically be 0.6 $\mu$m, 0.8 $\mu$m, 1 $\mu$m, 1.2 $\mu$m, 1.4 $\mu$m, 1.6 $\mu$m, 1.8 $\mu$m, 2.0 $\mu$m, 2.2 $\mu$m, 2.4 $\mu$m, 2.5 $\mu$m, or the like, or may also be other values within the range, may be selected according to actual requirements, and is not limited herein. It may be understood that, the number distribution median particle size $D_{n50}$ of the product of the crushing treatment is within the range, such that the particles of the matrix material are uniform, facilitating the subsequent coating treatment and micron-sized particle dissociation treatment.

In some implementations, the crushing treatment is a gas crushing treatment, and an air pressure of the gas crushing treatment is 0.3 MPa-0.8 MPa. Optionally, the air pressure of the gas crushing treatment may specifically be 0.3 MPa, 0.4 MPa, 0.5 MPa, 0.6 MPa, 0.7 MPa, 0.8 MPa, or the like, or may also be other values within the range, may be selected according to actual requirements, and is not limited herein. It may be understood that, the air pressure of the gas crushing treatment is within the range, such that the volume distribution median particle size $D_{v50}$ and number distribution median particle size $D_{n50}$ of the obtained gas-crushed product may meet requirements required.

In some implementations, a grading frequency of the gas crushing treatment is 35 Hz-60 Hz. Optionally, the grading frequency of the gas crushing treatment may specifically be 35 Hz, 40 Hz, 45 Hz, 46 Hz, 47 Hz, 48 Hz, 49 Hz, 50 Hz, 60 Hz, or the like, or may also be other values within the range, may be selected according to actual requirements, and is not limited herein. It may be understood that, the grading frequency affects the particle size of the matrix material after the gas crushing treatment. The grading frequency of the preparation method of the present disclosure is within the range, such that the particle size of the obtained particles is appropriate, facilitating the subsequent coating treatment.

At S20, the matrix material and the coating agent are mixed, then the secondary sintering treatment is performed, and a micron-sized particle dissociation treatment is performed on the secondary sintering product to obtain the cathode material.

In some implementations, elements in the coating agent contain at least one of Ni, Co, Mn, Ta, Mo, W, Mg, La, Al, Y, Ti, Zr, V, Nb, Ce, Sr, or B; and the elements in the coating agent may be selected according to actual requirements, and are not limited herein.

In some implementations, a mass ratio of the matrix material to the coating agent is 100:(0.05-3.0). Optionally, the mass ratio of the matrix material to the coating agent may specifically be 100:0.05, 100:0.06, 100:0.07, 100:0.08, 100:0.09, 100:0.10, 100:0.20, 100:0.30, 100:0.40, 100:0.50, 100:1.0, 100:1.5, 100:2.0, 100:2.5, 100:3.0, or the like, or may also be other values within the range, may be selected according to actual requirements, and is not limited herein.

In some implementations, the secondary sintering treatment is performed in the oxygen-containing atmosphere.

In some implementations, a heating rate $V_4$ of the secondary sintering treatment is 2 °C/min-8 °C/min. Optionally, the heating rate $V_4$ of the secondary sintering treatment may specifically be 2 °C/min, 3 °C/min, 4 °C/min, 5 °C/min, 6 °C/min, 7 °C/min, 8 °C/min, or the like, or may also be other values within the range, may be selected according to actual requirements, and is not limited herein.

In some implementations, a sintering temperature $T_4$ of the secondary sintering treatment is 350 °C-600 °C. Optionally, the sintering temperature $T_4$ of the secondary sintering treatment may specifically be 350 °C, 380 °C, 410 °C, 440 °C, 470 °C, 500 °C, 530 °C, 560 °C, 590 °C, 600 °C, or the like, or may also be other values within the range, may be selected according to actual requirements, and is not limited herein.

In some implementations, a temperature-holding time $t_4$ for the secondary sintering treatment is 5 h-10 h. Optionally, the temperature-holding time for the secondary sintering treatment may specifically be 5 h, 6 h, 7 h, 8 h, 9 h, 10 h, etc., or may be other values within the range, may be selected according to actual requirements, and is not limited herein.

In some implementations, the micron-sized particle dissociation treatment includes a grinding treatment, and a grinding frequency of the grinding treatment is 20 Hz-50 Hz. Optionally, the grinding frequency of the grinding treatment may specifically be 20 Hz, 25 Hz, 30 Hz, 35 Hz, 40 Hz, 45 Hz, 50 Hz, etc., or may be other values within the range, may be selected according to actual requirements, and is not limited herein.

In some implementations, a grinding disk spacing of the grinding treatment is 30 μm-150 μm. Optionally, the grinding disk spacing of the grinding treatment may specifically be 30 μm, 40 μm, 50 μm, 60 μm, 70 μm, 80 μm, 90 μm, 100 μm, 110 μm, 120 μm, 130 μm, 140 μm, 150 μm, etc., or may be other values within the range, may be selected according to actual requirements, and is not limited herein.

In some implementations, the preparation method further includes: sieving and demagnetizing processes are performed on the secondary sintering product to obtain the cathode material.

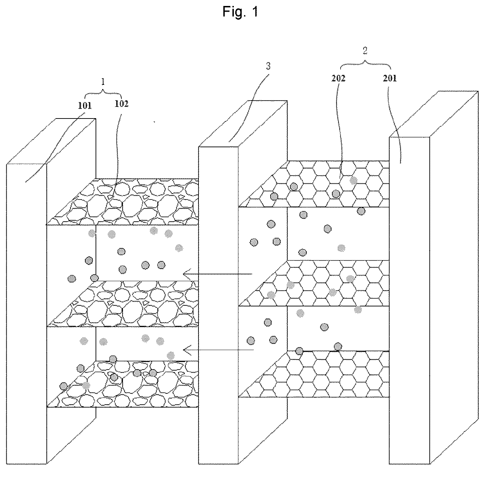

In a third aspect, the present disclosure provides a battery. Embodiments of the present disclosure further provide a battery. Fig. 1 is a schematic diagram of a discharging state of a battery according to embodiments of the present disclosure. As shown in Fig. 1, the battery includes a housing and an electrode assembly. The electrode assembly includes a cathode plate 1, an anode plate 2, and a separation film 3. The separation film 3 is disposed between the cathode plate 1 and the anode plate 2. The electrode assembly may be of a laminated structure, which is formed by sequentially alternately stacking the cathode plate 1, the separation film 3, and the anode plate 2. In some other implementations, the electrode assembly may also be of a winding structure, which is formed by first sequentially stacking and then winding the cathode plate, the separation film, and the anode plate.

In some implementations, the cathode plate 1 includes a cathode current collector 101 and a cathode active layer 102 disposed on at least one surface of the cathode current collector 101.

In some implementations, the cathode current collector 101 may use aluminum foil, nickel foil, or the like, or may be a composite current collector disclosed in any related art, for example, but not limited to, a current collector that is formed by combining the foregoing conductive foil (aluminum foil, nickel foil, or the like) and a polymer substrate. The cathode active layer 102 contains the cathode material of the first aspect or a cathode material prepared by the preparation method.

In some implementations, the anode plate 2 includes an anode current collector 201 and an anode active material layer 202 disposed on at least one surface of the anode current collector.

In some implementations, the anode current collector 201 may use at least one of copper foil, nickel foil, stainless steel foil, titanium foil, or a carbon-based current collector, or may be a composite current collector disclosed in any related art, for example, but not limited to, a current collector that is formed by combining conductive foil and a polymer substrate. The anode active material layer 202 includes an anode material, and the anode material includes at least one of a silicon anode material, a silicon carbon anode material, a graphite anode material, or the like.

The battery provided in the embodiments of the present disclosure has the advantages of being high in capacity, high in initial coulombic efficiency, long in cycle life, excellent in rate performance, and low in expansion. The battery may be a lithium ion battery, a sodium ion battery, a solid-state electrolyte battery, etc., which is not limited herein.

The mplementations of the present disclosure are further described below with a plurality of embodiments. The embodiments of the present disclosure are not limited to the following specific embodiments. Changes may be implemented appropriately within the scope of unchanged primary rights.

Embodiment 1

(1) A cathode material precursor $Ni_{0.6}Co_{0.1}Mn_{0.3}(OH)_2$ was well mixed with $Li_2CO_3$ and $ZrO_2$ according to a molar ratio of 1:1.03:0.0026, and a segmented sintering treatment was performed in an oxygen atmosphere according to the following sintering parameters, so as to obtain a segmented sintering treatment product: a heating rate of a first phase was 5 °C/min, a sintering temperature was 300 °C, and a temperature-holding time was 1 h; a heating rate of a second phase was 3 °C/min, a sintering temperature was 800 °C, a temperature-holding time was 5 h; and a heating rate of a third phase was 1.5 °C/min, a sintering temperature was 950 °C, a temperature-holding time was 8 h.

(2) Opposite rolling, gas crushing, and sieving treatments were performed on the segmented sintering treatment product to obtain a matrix material, and a volume distribution median particle size $D_{v50}$ of the matrix material was 3.7 μm, wherein an air pressure set during gas crushing was 0.55 MPa, and a grading frequency was 40 Hz.

(3) The matrix material, $Al_2O_3$ and $WO_3$ were well mixed according to a weight ratio of 1:0.002:0.003, and then were subjected to a secondary sintering treatment in the oxygen atmosphere, so as to obtain a secondary sintering product, where a heating rate of the secondary sintering treatment was 2 °C/min, a sintering temperature was 500 °C, and a temperature-holding time was 6 h.

(4) Micron-sized particle dynamic dissociation was performed on the secondary sintering product, a grinding frequency of a device was set to 25 Hz, a grinding disk spacing was 40 μm, a crushed product was obtained, and then was sieved and demagnetized to obtain a cathode material.

Embodiment 2

A difference between this embodiment and Embodiment 1 lied in that, the $Li_2CO_3$ was replaced with LiOH.

Embodiment 3

Differences between this embodiment and Embodiment 1 lied in that, the cathode material precursor was $Ni_{0.5}Co_{0.2}Mn_{0.3}(OH)_2$, and the sintering temperature of the third phase was 970 °C.

Embodiment 4

Differences between this embodiment and Embodiment 1 lied in that, the cathode material precursor was $Ni_{0.7}Co_{0.2}Mn_{0.2}(OH)_2$, and the sintering temperature of the third phase was 930 °C.

Embodiment 5

Differences between this embodiment and Embodiment 1 lied in that, the cathode material precursor was $Ni_{0.8}Co_{0.1}Mn_{0.1}(OH)_2$, and the sintering temperature of the third phase was 900 °C.

Embodiment 6

A difference between this embodiment and Embodiment 1 lied in that, the heating rate of the first phase was 3 °C/min.

Embodiment 7

A difference between this embodiment and Embodiment 1 lied in that, the heating rate of the second phase was 1.5 °C/min.

Embodiment 8

A difference between this embodiment and Embodiment 1 lied in that, the heating rate of the third phase was 3 °C/min.

Embodiment 9

Differences between this embodiment and Embodiment 1 lied in that, the cathode material precursor was $Ni_{0.8}Co_{0.1}Mn_{0.1}(OH)_2$, the sintering temperature of the first phase was 100 °C, the sintering temperature of the second phase was 400 °C, and the sintering temperature of the third phase was 800 °C.

Embodiment 10

Differences between this embodiment and Embodiment 1 lied in that, the sintering temperature of the first phase was 300 °C, the sintering temperature of the second phase was 800 °C, and the sintering temperature of the third phase was 1000 °C.

Embodiment 11

Differences between this embodiment and Embodiment 1 lied in that, the temperature-holding time for the first phase was 1 h, the temperature-holding time for the second phase was 4 h, and the temperature-holding time for the third phase was 5 h.

Embodiment 12

Difference between this embodiment and Embodiment 1 lied in that, the temperature-holding time for the first phase was 2 h, the temperature-holding time for the second phase was 6 h, and the temperature-holding time for the third phase was 10 h.

Embodiment 13

Differences between this embodiment and Embodiment 1 lied in that, the temperature-holding time for the first phase was 0.5 h, the temperature-holding time for the second phase was 3 h, and the temperature-holding time for the third phase was 4 h.

Embodiment 14

Differences between this embodiment and Embodiment 1 lied in that, the temperature-holding time for the first phase was 3 h, the temperature-holding time for the second phase was 7 h, and the temperature-holding time for the third phase was 11 h.

Embodiment 15

Differences between this embodiment and Embodiment 1 lied in that, the air pressure of the gas crushing treatment was 0.3 MPa, the grading frequency was 35 Hz, and the volume distribution median particle size $D_{v50}$ of the obtained matrix material was 3.8 $\mu$m.

Embodiment 16

Differences between this embodiment and Embodiment 1 lied in that, the air pressure of the gas crushing treatment was 0.8 MPa, the grading frequency was 60 Hz, and the volume distribution median particle size $D_{v50}$ of the obtained matrix material was 3.5 $\mu$m.

Embodiment 17

Differences between this embodiment and Embodiment 1 lied in that, the air pressure of the gas crushing treatment was 0.1 MPa, the grading frequency was 30 Hz, and the volume distribution median particle size $D_{v50}$ of the obtained matrix material was 4 $\mu$m.

Embodiment 18

Difference between this embodiment and Embodiment 1 lied in that, the air pressure of the gas crushing treatment was 0.9 MPa, the grading frequency was 65 Hz, and the volume distribution median particle size $D_{v50}$ of the obtained matrix material was 3.3 $\mu$m.

Embodiment 19

Differences between this embodiment and Embodiment 1 lied in that, the grinding frequency of micron-sized particle dynamic dissociation was 20 Hz, and the grinding disk spacing was 30 $\mu$m.

Embodiment 20

Differences between this embodiment and Embodiment 1 lied in that, the grinding frequency of micron-sized particle dynamic dissociation was 50 Hz, and the grinding disk spacing was 150 $\mu$m.

Embodiment 21

Differences between this embodiment and Embodiment 1 lied in that, the grinding frequency of micron-sized particle dynamic dissociation was 10 Hz, and the grinding disk spacing was 20 $\mu$m.

Embodiment 22

Differences between this embodiment and Embodiment 1 lied in that, the grinding frequency of micron-sized particle dynamic dissociation was 70 Hz, and the grinding disk spacing was 170 $\mu$m.

Embodiment 23

Differences between this embodiment and Embodiment 1 lied in that, the sintering temperature of the first phase was 300 °C, and the temperature-holding time was 1 h, the sintering temperature of the second phase was 800 °C, and the temperature-holding time was 4 h; and the sintering temperature of the third phase was 1000 °C, and the temperature-holding time was 5 h. The air pressure of the gas crushing treatment was 0.9 MPa, and the grading frequency was 65 Hz.

Comparative example 1

Differences between this comparative example and Embodiment 1 lied in that, primary sintering treatment was performed, and the segmented sintering treatment was not performed, wherein a heating rate of the primary sintering treatment was 3 °C/min, a sintering temperature was 950 °C, and a temperature-holding time was 8 h.

Comparative example 2

Differences between this comparative example and Embodiment 1 lied in that, primary sintering treatment was performed, and the segmented sintering treatment was not performed, wherein the heating rate of the primary sintering treatment was 1.5 °C/min, the sintering temperature was 950 °C, and the temperature-holding time was 6 h.

Comparative example 3

A difference between this comparative example and Embodiment 1 lied in that, the micron-sized particle dynamic dissociation treatment was not performed on the secondary sintering product.

Comparative example 4

Differences between this comparative example and Embodiment 5 lied in that, the $D_{v50}$ of large particles in the cathode material precursor $Ni_{0.8}Co_{0.1}Mn_{0.1}(OH)_2$ was 11.0 $\mu$m, the $D_{v50}$ of small particles was 3.0 $\mu$m, and a number ratio of the large particles to the small particles was 9:1.

Comparative example 5

Differences between this comparative example and Embodiment 5 lied in that, the $D_{v50}$ of the large particles in the cathode material precursor $Ni_{0.8}Co_{0.1}Mn_{0.1}(OH)_2$ was 11.0 $\mu$m, the $D_{v50}$ of the small particles was 3.0 $\mu$m, and the number ratio of the large particles to the small particles was 1:9; primary sintering treatment was performed, and the segmented sintering treatment was not performed, wherein the heating rate of the primary sintering treatment was 3 °C/min, the sintering temperature was 900 °C, and the temperature-holding time was 8 h; and the micron-sized particle dynamic dissociation treatment was not performed on the secondary sintering product in Comparative example 5.

Test method description:

Test for actual compaction density: a compaction test was performed by using Carver4350L. An instrument was calibrated, then 1 g of a material was weighed and added to a die, a top pillar was mounted and put in a manual compaction density meter, a sample was taken out after 30s, then pressure relief was performed after a pressure rod was pressed for 30s, and data was recorded.

Test for true density of cathode material: a test was performed by using a 3H-2000TD fully automatic true density meter. The instrument was calibrated, then 7 g of the material was weighed and added to a sample tube, the number of times for washing the sample was set, then start testing was clicked, and the data was recorded after the test was completed.

Test for specific surface area of cathode material: a test was performed by using a dynamic specific surface area rapid measuring instrument JW-DX of JWGB Instruments Co. Ltd., with the unit being $m^2$/g.

Test for angle of repose of cathode material: the material was slowly added from 5 cm above a funnel, the material fell onto a horizontal metal plate through the funnel to form a cone, when the surface of powder slid, and an included angle between a conical surface and a bottom surface of the cone was determined as an angle of repose of the material.

Test for volume distribution median particle size and number distribution median particle size of cathode material: a test was performed by using MS3000, the mass of a sample was 3 g, a dispersing agent was 2-3 drops of sodium hexametaphosphate, an ultrasound time was 30s, volume distribution particle sizes $D_{v10}$, $D_{v50}$, and $D_{v90}$ and volume particle size curves were obtained through testing, and a Span value was calculated according to a formula $\text{Span} = \frac{D_{v90} - D_{v10}}{D_{v50}}$; and the volume distribution median particle size $D_{v50}$ was converted in the MS3000, and then a number distribution median particle size $D_{n50}$ was obtained.

Test for average particle size and particle size range of primary particles: 5 SEM images of the sample at 3000x magnification in different positions by using a HITACHI S4800 SEM, and then no less than 200 particles were taken from the SEM images by using NanoMeasure software, so as to obtain an average particle size. According to software analysis results, a particle size range of the material was obtained by subtracting the particle size of the smallest particle from the particle size of the largest particle.

The capacity, rate, and cycle were measured through a button battery.

Mixing and homogenization were performed according to a mass ratio of cathode material:SP:PVDF adhesive solution=93:5:2, then the slurry was uniformly coated on aluminum foil with a thickness of 16 $\mu$m, and the aluminum foil was put in a 100 °C oven for drying for 12 h. A Li metal sheet with a diameter of 16 mm and a thickness of 1 mm was used as an anode, a polyethylene porous film with a thickness of 20 $\mu$m was used as a separator, and an equivalent mixed solution of Ethylene Carbonate (EC) and Diethyl Carbonate (DEC) using 1 mol/L $LiPF_6$ as an electrolyte was used as electrolyte. The cathode plate, the separator, the anode plate, and the electrolyte were assembled into a 2016-type button battery in an Ar glove box in which a water content and an oxygen content were both less than 5 ppm.

Capacity test: a Land Test System is adopted to perform an electrical performance test (charging and discharging voltages were 2.8-4.35 V, and a temperature condition was 25 °C), charging was performed at 0.1 C, discharging was performed at 0.1 C, a constant-voltage cut-off current was 0.005 C, and a discharging gram capacity CmAh/g was calculated according to a discharging capacity.

Cycle test: 25 °C, charging and discharging voltages were 2.8-4.35 V, charging was performed at 0.5 C, discharging was performed at 1 C, 50 cycles were performed, the constant-voltage cut-off current was 0.05 C, and a final capacity retention rate for 50 cycles was cycling performance.

Test results:

Table 1

| Sample | Pactual (g/cm³) | Pequivalent (g/cm³) | Span | β | $D_{n50}$ (μm) | $D_{v50}$ (μm) | α (rad) | ρ (g/cm³) |
|---|---|---|---|---|---|---|---|---|
| Embodiment 1 | 3.57 | 3.64 | 1.30 | 1.26 | 2.35 | 3.73 | 0.88 | 4.66 |
| Embodiment 2 | 3.53 | 3.60 | 1.28 | 1.26 | 2.38 | 3.80 | 0.91 | 4.66 |

(continued)

| Sample | Pactual (g/cm$^3$) | Pequivalent (g/cm$^3$) | Span | β | $D_{n50}$ (μm) | $D_{v50}$ (μm) | α (rad) | ρ (g/cm$^3$) |
|---|---|---|---|---|---|---|---|---|
| Embodiment 3 | 3.50 | 3.57 | 1.25 | 1.27 | 2.35 | 3.82 | 0.89 | 4.65 |
| Embodiment 4 | 3.48 | 3.55 | 1.20 | 1.20 | 2.33 | 3.36 | 0.92 | 4.68 |
| Embodiment 5 | 3.47 | 3.54 | 1.18 | 1.16 | 2.32 | 3.14 | 0.95 | 4.70 |
| Embodiment 6 | 3.37 | 3.44 | 1.21 | 1.31 | 2.21 | 3.78 | 0.90 | 4.66 |
| Embodiment 7 | 3.31 | 3.38 | 1.16 | 1.37 | 2.14 | 4.03 | 0.85 | 4.62 |
| Embodiment 8 | 3.35 | 3.41 | 1.37 | 1.33 | 1.99 | 3.53 | 0.93 | 4.67 |
| Embodiment 9 | 3.43 | 3.50 | 1.29 | 1.18 | 2.17 | 3.01 | 0.99 | 4.70 |
| Embodiment 10 | 3.49 | 3.56 | 1.14 | 1.25 | 2.56 | 4.01 | 0.91 | 4.66 |
| Embodiment 11 | 3.44 | 3.51 | 1.33 | 1.27 | 2.15 | 3.45 | 0.93 | 4.66 |
| Embodiment 12 | 3.48 | 3.55 | 1.18 | 1.28 | 2.32 | 3.82 | 0.84 | 4.65 |
| Embodiment 13 | 3.31 | 3.38 | 1.37 | 1.35 | 1.86 | 3.39 | 0.89 | 4.66 |
| Embodiment 14 | 3.37 | 3.43 | 1.02 | 1.26 | 2.53 | 4.01 | 0.91 | 4.66 |
| Embodiment 15 | 3.48 | 3.55 | 1.14 | 1.30 | 2.37 | 4.01 | 0.82 | 4.66 |
| Embodiment 16 | 3.51 | 3.58 | 1.53 | 1.29 | 2.02 | 3.35 | 0.92 | 4.66 |
| Embodiment 17 | 3.30 | 3.37 | 0.87 | 1.51 | 2.87 | 6.54 | 0.79 | 4.66 |
| Embodiment 18 | 3.38 | 3.45 | 1.45 | 1.25 | 1.88 | 2.95 | 0.95 | 4.66 |
| Embodiment 19 | 3.46 | 3.53 | 1.29 | 1.26 | 2.28 | 3.62 | 0.94 | 4.66 |
| Embodiment 20 | 3.44 | 3.51 | 1.21 | 1.32 | 2.21 | 3.86 | 0.83 | 4.66 |
| Embodiment 21 | 3.29 | 3.36 | 1.36 | 1.29 | 2.11 | 3.53 | 1.07 | 4.66 |
| Embodiment 22 | 3.34 | 3.41 | 0.93 | 1.41 | 2.16 | 4.32 | 0.65 | 4.66 |
| Embodiment 23 | 3.10 | 3.16 | 1.04 | 1.31 | 1.83 | 3.15 | 0.91 | 4.66 |
| Comparative example 1 | 3.09 | 3.15 | 0.76 | 1.13 | 2.84 | 3.62 | 1.22 | 4.66 |
| Comparative example 2 | 3.04 | 3.10 | 0.82 | 1.29 | 2.41 | 4.03 | 1.05 | 4.66 |
| Comparative example 3 | 3.07 | 3.14 | 0.74 | 1.07 | 3.21 | 3.65 | 1.45 | 4.66 |
| Comparative example 4 | 2.96 | 3.02 | 1.03 | 1.65 | 2.68 | 7.34 | 1.35 | 4.76 |
| Comparative example 5 | 3.70 | 3.77 | 1.14 | 1.91 | 3.81 | 13.87 | 0.75 | 4.71 |

Table 2

| Sample | Discharging capacity at 0.1 C (mAh·g$^{-1}$) | Retention rate of 50 cycles (%) |
|---|---|---|
| Embodiment 1 | 186.5 | 98.30% |
| Embodiment 2 | 185.1 | 97.20% |
| Embodiment 3 | 173.5 | 98.00% |
| Embodiment 4 | 193.8 | 96.80% |
| Embodiment 5 | 203 | 91.2% |
| Embodiment 6 | 183.3 | 97.40% |
| Embodiment 7 | 182.7 | 97.50% |
| Embodiment 8 | 184.5 | 96.40% |
| Embodiment 9 | 185.6 | 97.70% |
| Embodiment 10 | 185.8 | 97.50% |

(continued)

| Sample | Discharging capacity at 0.1 C (mAh·g$^{-1}$) | Retention rate of 50 cycles (%) |
|---|---|---|
| Embodiment 11 | 185.9 | 97.80% |
| Embodiment 12 | 185.3 | 98.50% |
| Embodiment 13 | 180.3 | 95.10% |
| Embodiment 14 | 183.4 | 96.70% |
| Embodiment 15 | 182.9 | 98.60% |
| Embodiment 16 | 187.1 | 95.10% |
| Embodiment 17 | 180.5 | 98.00% |
| Embodiment 18 | 188.8 | 94.40% |
| Embodiment 19 | 186.1 | 97.90% |
| Embodiment 20 | 182.2 | 96.80% |
| Embodiment 21 | 188.3 | 95.30% |
| Embodiment 22 | 181.6 | 96.10% |
| Embodiment 23 | 182.7 | 94.80% |
| Comparative example 1 | 178.5 | 94.20% |
| Comparative example 2 | 176.8 | 93.60% |
| Comparative example 3 | 173.4 | 91.30% |
| Comparative example 4 | 198.6 | 85.50% |
| Comparative example 5 | 204.2 | 88.30% |

Test result analysis:

According to the test results of Embodiments 11-23 of the present disclosure, it might be learned that, by controlling the dissociation degree of the cathode material within the range of 1.1-1.8, and controlling the Span value of the cathode material within the range of 0.9-1.5 at the same time, the particle size distribution width of the cathode material might be guaranteed, facilitating the increasing of the compaction density; and at the same time, the dissociation degree of the cathode material was guaranteed, such that soft agglomeration of particles was reduced, thereby improving the capacity and cycling performance of the cathode material. The cathode material provided in the present disclosure could combine a high capacity, excellent cycling performance, and a high energy density.

According to the test results of Embodiment 1 and Embodiments 2-5 of the present disclosure, it might be learned that, provided that the conditions of the preparation process of the present disclosure remained the same, the compaction density of the cathode material obtained by using different cathode material precursors or lithium sources was at a high level, and under the condition of the relationship between the $P_{equivalent}$ and the volume particle size distribution width Span, number distribution median particle size Dn50, true density $\rho$, dissociation degree $\beta$, and angle of repose astill meeting Formula (I), $3.2 \leq P_{equivalent} \leq 3.7$, it might ensure that the cathode material had an appropriate compaction density to increase an energy density, the integrity of a crystal structure of the cathode material during charging and discharging of a lithium ion battery might also be ensured, a gas production value was reduced, and the cycling performance or safety performance of the cathode material was better. Furthermore, the volume particle size distribution width Span, number distribution median particle size $D_{n50}$, true density $\rho$, dissociation degree $\beta$, and angle of repose $\alpha$ were within the ranges of the present disclosure, such that the electrode plate compaction density $P_{equivalent}$ of the cathode material met an optimal range: $3.5 \leq P_{equivalent} \leq 3.7$.

From the test results of Embodiment 1 and Embodiments 6-8, it might be learned that, during the preparation of the cathode material, when the heating rates of the first phase, second phase, and third phase met $0 < V_3 < V_2 < V_1 < 5$ °C/min, the prepared cathode material was good in discharging capacity while having a certain electrode plate compaction density. The heating rates of the first phase, second phase, and third phase in Embodiments 6-8 did not meet the above limitation, and the electrode plate compaction density and the discharging capacity were slightly reduced.

From the test results of Embodiment 1 and Embodiments 9-10, it might be learned that, during the preparation of the cathode material, when the sintering temperatures of the first phase, second phase, and third phase met the following: $T_1$ was 100 °C-300 °C, $T_2$ was 400 °C-800 °C, and $T_3$ was 700 °C-1000 °C, the prepared cathode material was good in discharging capacity while having a certain electrode plate compaction density. The sintering temperatures of the first phase, second phase, and third phase in Embodiment 11 did not meet the above limitation, the sintering temperature was too high, the particle size was larger, and the electrode plate compaction density and the discharging capacity were slightly reduced.

From the test results of Embodiment 1 and Embodiments 11-12, it might be learned that, during the preparation of the cathode material, when the temperature-holding times of the first phase, second phase, and third phase respectively met the following: $t_1$ was 1 h-2 h, $t_2$ was 4 h-6 h, and $t_3$ was 5 h-10 h, the prepared cathode material was good in discharging capacity while having a certain electrode plate compaction density. The temperature-holding times of the first phase, second phase, and third phase in Embodiments 14-15 did not meet the above limitation, and the electrode plate compaction density and the discharging capacity were slightly reduced.

From the test results of Embodiment 1 and Embodiments 15-16, it might be learned that, during the preparation of the cathode material, when the air pressure and grading frequency during the crushing treatment of the matrix material met 0.3 MPa-0.8 MPa and 35 Hz-60 Hz, the dissociation degree of the obtained matrix material was in the rational range, and as the grading frequency increased, a micro-powder amount increased accordingly, and the Span significantly increased, but the electrode plate compaction density slightly reduced. However, the increased micro-powder amount caused the specific surface area of the cathode material to slightly increase, the activity of side reactions between the cathode material and the electrolyte during cycling was improved, and the cycling performance was slightly reduced.

In Embodiments 17-18, the air pressure and the grading frequency in Embodiment 17 were too small, and the Span of the cathode material was relatively small, leading to a reduction in the compaction density of the cathode material, and the capacity of the cathode material was slightly reduced. In Embodiment 18, the air pressure and the grading frequency were too large, and the Span of the cathode material was relatively large. Although the compaction density of the cathode material increased, and the capacity of the cathode material was slightly increased, the side reactions between the cathode material and the electrolyte exacerbated due to increased small particles of the cathode material, such that the cycling performance was slightly reduced.

From the test results of Embodiment 1 and Embodiments 19-20, it might be learned that, during the preparation of the cathode material of Embodiment 1, when the grinding frequency and the grinding spacing of micron-sized particle dynamic dissociation met 20 Hz-50 Hz and 30 µm-150 µm, the obtained cathode material had a rational dissociation degree and compaction density. In Embodiments 21-22, the grinding disk spacing was too small, the grinding frequency was too large, changes in a friction degree among the secondary sintering product particles were too large, the electrode plate compaction density slightly reduced, and the discharging capacity and cycling performance of the lithium ion battery were affected.

From the test results of Embodiment 1 and Embodiment 23, it might be learned that, during the preparation of the cathode material of Embodiment 23, the sintering temperature and the temperature-holding time were taken as minimum values, causing the growth of the primary particles to be limited, such that the median particle size $D_{v50}$ of the cathode material greatly reduced, and the angle of repose $\alpha$ was increased; the grinding air pressure and the grading frequency of gas crushing were taken as maximum values, collision among the primary particles increased, but due to sintering, the size of the primary particles was relatively small (i.e., particle strength was relatively high, not facilitating generation of micro-powder), such that the Span was slightly reduced. The span value of the obtained cathode material was 1.04, and the dissociation degree $\beta$ was 1.31. However, affected by too small $D_{n50}$, the finally obtained electrode plate compaction density $P_{equivalent}$ of the cathode material slightly reduced, which was 3.16, not meeting $3.2 \leq P_{equivalent} \leq 3.7$, and the discharging capacity and cycling performance of the lithium ion battery were also affected.

From the test results of Embodiment 1 and Comparative examples 1-2, it might be learned that, the segmented sintering treatment was not performed in Comparative examples 1-2, a one-stage heating rate was used for sintering, regardless of a prolonged or shortened constant temperature time, the dissociation degree and Span of the cathode material were significantly less than that of the cathode material prepared in Embodiment 1, and accordingly, there was also an apparent difference in discharging capacity and cycling performance.

From the test results of Embodiment 1 and Comparative example 3, it might be learned that, the dissociation degree of the cathode material obtained without using the micron-sized particle dynamic dissociation treatment was relatively low, and soft agglomeration easily occurred among the particles, leading to poor discharging capacity and cycling performance.

From the test results of Embodiment 5 and Comparative example 4, it might be learned that, when the proportion of the small particles in the cathode material was relatively large, the Span value slightly increased, but the flowability of the obtained cathode material was worsen, the angle of repose increased, the dissociation degree significantly reduced, and the small particles filled the gap between the large particles. Although the electrode plate compaction density significantly increased, under the excessive electrode plate compaction density, during the preparation of the cathode plate, microcracks easily generated in the large particles, and the specific surface area of the cathode material increased, affecting the cycling performance of the lithium ion battery.

From the test results of Embodiment 5 and Comparative example 5, it might be learned that, when the proportion of the large particles in the cathode material was relatively large and 90%, and the particle size of the large particles was 13 $\mu$m, since the cathode material was a conventional high-nickel polycrystalline material, the micron-sized particle dynamic dissociation treatment was not performed, the dissociation degree of the polycrystalline cathode material itself was high, and the one-stage heating rate was used for the primary sintering treatment, such that the electrode plate compaction density of the obtained cathode material significantly reduced, thus affecting the functioning of the energy density of the lithium ion battery.

The structure, features, and effects of the present disclosure are described in detail through the embodiments shown in the drawings. The foregoing description is merely preferred embodiments of the present disclosure, and the present disclosure does not limit the scope of implementation as shown in the drawing. All changes made according to the concept of the present disclosure or modified equivalent embodiments with equivalent changes shall fall within the protection scope of the present disclosure without departing from the spirit of the specification and drawings.

**Claims**

1.  A cathode material, wherein a number distribution median particle size of the cathode material is $D_{n50}$ $\mu$m, a volume particle size distribution width of the cathode material is Span, Span $\mathrm{Span} = \frac{D_{v90} - D_{v10}}{D_{v50}}$, a dissociation degree of the cathode material is $\beta$, $\beta = \sqrt{\frac{D_{v50}}{D_{n50}}}$, a true density of the cathode material is $\rho$ g/cm$^3$, an angle of repose of the cathode material is $\alpha$ rad, and $P_{equivalent}$ is an equivalent density calculation value of the cathode material, with the unit in g/cm$^3$, wherein the cathode material meets at least one of the following relationships:

    1), $1.1 \leq \beta < 1.65$, and $0.9 \leq \mathrm{Span} \leq 1.53$; or
    2),

    $$P_{equivalent} = \frac{\mathrm{Span} \times D_{n50} \times \rho}{\beta \times \alpha} \times 0.089 + 2.5, \text{ and } 3.2 \leq P_{equivalent} \leq 3.7.$$

2.  The cathode material according to claim 1, wherein the number distribution median particle size of the cathode material is $D_{n50}$ $\mu$m, the true density of the cathode material is $\rho$ g/cm$^3$, the angle of repose of the cathode material is $\alpha$ rad, and the $P_{equivalent}$ is an equivalent density calculation value of the cathode material, with the unit in g/cm$^3$, wherein a relationship between the $P_{equivalent}$ and the volume particle size distribution width Span of the cathode material, the number distribution median particle size $D_{n50}$ of the cathode material, the true density $\rho$, the dissociation degree $\beta$, and the angle of repose $\alpha$ meets:

    $$P_{equivalent} = \frac{\mathrm{Span} \times D_{n50} \times \rho}{\beta \times \alpha} \times 0.089 + 2.5, \text{ and } 3.2 \leq P_{equivalent} \leq 3.7.$$

3.  The cathode material according to claim 1 or 2, wherein the volume particle size distribution width of the cathode material is Span, Span $\mathrm{Span} = \frac{D_{v90} - D_{v10}}{D_{v50}}$, and the dissociation degree of the cathode material is $\beta$, $\beta = \sqrt{\frac{D_{v50}}{D_{n50}}}$, wherein the cathode material meets the following relationships: $1.1 \leq \beta < 1.65$, and $0.9 \leq \mathrm{Span} \leq 1.53$.

4.  The cathode material according to claim 1, wherein a general chemical formula of the cathode material is $Li_a Ni_{x-} Co_y M_z D_b O_2$, wherein $0.9 \leq a \leq 1.05$, $0.5 \leq x \leq 1$, $0 \leq y \leq 0.5$, $x+y+z+b=1$, $0 \leq b \leq 0.3$, M is selected from at least one of Mn or Al, and D comprises at least one of Ni, Co, Mn, Ta, Mo, W, Mg, La, Al, Y, Ti, Zr, V, Nb, Ce, Sr, or B.

5.  The cathode material according to claim 1, wherein a volume distribution median particle size $D_{v50}$ of the cathode material is 3 $\mu$m-15 $\mu$m; and/or the number distribution median particle size $D_{n50}$ of the cathode material is 1.0 $\mu$m-2.5 $\mu$m.

6.  The cathode material according to claim 1, wherein the true density $\rho$ of the cathode material is 4.5 g/cm$^3$-4.8 g/cm$^3$; and/or the angle of repose $\alpha$ of the cathode material is 0.70 rad-1.22 rad.

7. The cathode material according to claim 1, wherein an actual electrode plate compaction density of the cathode material under a pressure of 3T is $P_{actual}$, wherein $0.75P_{equivalent} \leq P_{actual} \leq 1.3P_{equivalent}$.

8. The cathode material according to claim 1, comprising a plurality of primary particles, and having at least one of the following features:

   (1) the primary particles consist essentially of monocrystalline structures;
   (2) an average particle size of the primary particles is 2.0 $\mu$m-2.2 $\mu$m; or
   (3) a particle size range of the primary particles is <2 $\mu$m.

9. The cathode material according to claim 1, wherein a specific surface area of the cathode material is 0.5 m$^2$/g-1.0 m$^2$/g.

10. The cathode material according to claim 1, wherein in a particle size distribution pattern of the cathode material, a volume particle size distribution curve of the cathode material is normally distributed.

11. A method for preparing a cathode material, comprising the following steps:

   performing a segmented sintering treatment on a mixture containing a cathode material precursor and a lithium source to obtain a matrix material, wherein the segmented sintering treatment comprises a first phase, a second phase, and a third phase, which are performed in sequence, a sintering temperature $T_1$ for the first phase is 100 °C-300 °C, a sintering temperature $T_2$ for the second phase is 400 °C-800 °C, and a sintering temperature $T_3$ for the third phase is 700 °C-1000 °C; and
   mixing the matrix material and a coating agent, then performing a secondary sintering treatment, and performing a micron-sized particle dissociation treatment on a secondary sintering product to obtain a cathode material.

12. The method for preparing a cathode material according to claim 11, wherein the method has at least one of the following features:

   (1) the cathode material precursor comprises at least one of an oxide of $Ni_xCo_yM_{1-x-y}$ or a hydroxide of the $Ni_xCo_yM_{1-x-y}$, wherein $0.33 \leq x < 1$, $0 \leq y \leq 0.33$, and M is selected from at least one of Mn or Al;
   (2) the lithium source comprises at least one of lithium hydroxide, lithium carbonate, lithium nitrate, lithium acetate, lithium sulfate, or lithium oxalate;
   (3) a molar ratio of the cathode material precursor to the lithium source is 1:(1-1.06); or
   (4) the mixture further comprises an additive, and elements in the additive comprise at least one of Ni, Co, Mn, Ta, Mo, W, Mg, La, Al, Y, Ti, Zr, V, Nb, Ce, Sr, or B; and/or a mass ratio of the cathode material precursor to the additive is 1:(0.05%-0.40%).

13. The method for preparing a cathode material according to claim 11, wherein

   a heating rate of the first phase is $V_1$, a heating rate of the second phase is $V_2$, a heating rate of the third phase is $V_3$, and $0 < V_3 < V_2 < V_1 < 5$ °C/min;
   and/or
   a temperature-holding time $t_1$ for the first phase is 1 h-2 h, a temperature-holding time $t_2$ for the second phase is 4 h-6 h, and a temperature-holding time $t_3$ for the third phase is 5 h-10 h.

14. The method for preparing a cathode material according to claim 11, further comprising performing a crushing treatment on the matrix material, wherein a volume distribution median particle size $D_{v50}$ of a product of the crushing treatment is 3.3 $\mu$m-4.0 $\mu$m; and/or a number distribution median particle size $D_{n50}$ of the product of the crushing treatment is 0.6 $\mu$m-2.5 $\mu$m.

15. A battery, comprising the cathode material according to any one of claims 1 to 10 or a cathode material prepared by the preparation method according to any one of claims 11 to 14.

Fig. 1

Fig. 2

Fig. 3

## INTERNATIONAL SEARCH REPORT

| International application No. |
| :-- |
| **PCT/CN2024/134719** |

**A. CLASSIFICATION OF SUBJECT MATTER**

H01M4/525(2010.01)i; H01M4/505(2010.01)i; H01M4/485(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC/CPC:H01M4/-,H01M10/-

Documentation searched other than minimum documentation to the extent that such documents are included in the fields searched

Electronic data base consulted during the international search (name of data base and, where practicable, search terms used)

CNTXT, DWPI, WPABS, ENTXTC, VEN, CNKI, ISI-Web of Science: 电池, 粒径, 正极, 活性物质, 真密度, 包覆, 第一, 第二, 第三, 第三次, 第三段, 二次, 三段, 烧结, 温度, 梯度, 预烧, 真密度, D10, D50, D90, Dn50, Dn90, Dv10, DV50, DV90, range[100~], battery, active material, positive, sinter+

**C. DOCUMENTS CONSIDERED TO BE RELEVANT**

| Category* | Citation of document, with indication, where appropriate, of the relevant passages | Relevant to claim No. |
| :-- | :-- | :-- |
| PX | CN 117976898 A (BTR (JIANGSU) NEW MATERIAL TECHNOLOGY CO., LTD.) 03 May 2024 (2024-05-03) claims 1-10 | 1-15 |
| X | CN 116314601 A (SUNWODA ELECTRIC VEHICLE BATTERY CO., LTD.) 23 June 2023 (2023-06-23) description, paragraphs 60-73 and 89, tables 1 and 2, and comparative example 1 | 1-10, 15 |
| X | CN 116706044 A (TIANJIN GUOAN MENGGULI NEW MATERIALS SCIENCE & TECHNOLOGY CO., LTD.) 05 September 2023 (2023-09-05) description, paragraphs 10-13, 39-54, 64, and 66 | 11-15 |
| X | CN 108933247 A (HUAI'AN NEW ENERGY MATERIAL TECHNOLOGY RESEARCH INSTITUTE) 04 December 2018 (2018-12-04) claims 1-4 | 11-15 |
| X | WO 2023092886 A1 (MICROVAST POWER SYSTEMS CO., LTD. et al.) 01 June 2023 (2023-06-01) claims 1-16, and description, page 9, paragraph 2 | 11-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| :-- | :-- | :-- | :-- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| :-- | :-- |
| **14 February 2025** | **21 February 2025** |

| Name and mailing address of the ISA/CN | Authorized officer |
| :-- | :-- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/134719**

### C.     DOCUMENTS CONSIDERED TO BE RELEVANT

| Category* | Citation of document, with indication, where appropriate, of the relevant passages | Relevant to claim No. |
|---|---|---|
| A | CN 115472898 A (SUNWODA ELECTRIC VEHICLE BATTERY CO., LTD.) 13 December 2022 (2022-12-13)<br>claims 1-13 | 1-10, 15 |
| A | CN 117293308 A (BTR NANO TECH CO., LTD.) 26 December 2023 (2023-12-26)<br>claims 1-9 | 1-10, 15 |
| A | WO 2019069668 A1 (SHOWA DENKO K.K. et al.) 11 April 2019 (2019-04-11)<br>claims 1-8 | 1-10, 15 |
| A | CN 113054186 A (HUIZHOU BYD INDUSTRIAL CO., LTD.) 29 June 2021 (2021-06-29)<br>claims 1-10 | 11-15 |

Form PCT/ISA/210 (second sheet) (July 2022)

**INTERNATIONAL SEARCH REPORT**
Information on patent family members

International application No.

**PCT/CN2024/134719**

| Patent document cited in search report | | | Publication date (day/month/year) | Patent family member(s) | | | Publication date (day/month/year) |
|---|---|---|---|---|---|---|---|
| CN | 117976898 | A | 03 May 2024 | None | | | |
| CN | 116314601 | A | 23 June 2023 | None | | | |
| CN | 116706044 | A | 05 September 2023 | None | | | |
| CN | 108933247 | A | 04 December 2018 | None | | | |
| WO | 2023092886 | A1 | 01 June 2023 | US | 2023163275 | A1 | 25 May 2023 |
| | | | | US | 12136730 | B2 | 05 November 2024 |
| CN | 115472898 | A | 13 December 2022 | None | | | |
| CN | 117293308 | A | 26 December 2023 | None | | | |
| WO | 2019069668 | A1 | 11 April 2019 | JP | 6595145 | B2 | 23 October 2019 |
| | | | | JPWO | 2019069668 | A1 | 14 November 2019 |
| | | | | US | 2020295359 | A1 | 17 September 2020 |
| | | | | US | 11777082 | B2 | 03 October 2023 |
| | | | | PL | 3694033 | T3 | 17 October 2022 |
| | | | | EP | 3694033 | A1 | 12 August 2020 |
| | | | | EP | 3694033 | A4 | 16 June 2021 |
| | | | | EP | 3694033 | B1 | 13 July 2022 |
| | | | | ES | 2928150 | T3 | 15 November 2022 |
| | | | | HUE | 059583 | T2 | 28 November 2022 |
| | | | | KR | 20200073208 | A | 23 June 2020 |
| | | | | KR | 102191190 | B1 | 16 December 2020 |
| | | | | TW | 201924120 | A | 16 June 2019 |
| | | | | TWI | 765100 | B | 21 May 2022 |
| CN | 113054186 | A | 29 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023118150356